# EUROPÄISCHE PATENTSCHRIFT

(11) **EP 0 355 295 B1**
(45) Veröffentlichungstag und Bekanntmachung des Hinweises auf die Patenterteilung: **27.04.1994**
(21) Anmeldenummer: 89110745.0
(22) Anmeldetag: 14.06.1989
(51) Int. Cl.: C04B 30/00, C01B 33/193

(54) **Verfahren zur Aufbereitung von Fällungskieselsäure und deren Verwendung zur Wärmedämmung**
Process for the treatment of precipitated silica, and its use in thermal insulation
Procédé pour le traitement de silice de précipitation et son utilisation pour l'isolation thermique

(30) Priorität: 24.08.1988 DE 3828668
(43) Veröffentlichungstag der Anmeldung: 28.02.1990
(73) Patentinhaber: Degussa Aktiengesellschaft, 60311 Frankfurt (DE)
(72) Erfinder: Reuter, Roland, D-6100 Darmstadt (DE); Zimmermann, Rolf, Dr., D-6450 Hanau 9 (DE); Sextl, Gerhard, Dr., D-6458 Rodenbach (DE); Kleinschmit, Peter, Dr., D-6450 Hanau 9 (DE); Schwarz, Rudolf, Dr., D-8755 Wasserlos (DE); Zetzmann, Klaus, Dr., D-8752 Kleinostheim (DE)

(56) Entgegenhaltungen:
- EP-A- 0 160 232
- EP-A- 0 190 582
- US-A- 4 681 788
- US-A- 4 798 753
- CHEMICAL ABSTRACTS, vol. 106, no. 10, Columbus, Ohio, USA & JP-A-61199001 (INOUE-JAPAX RESEARCH INC.) 03-09-1986 ref. no. 71886M

## Beschreibung

Die Erfindung betrifft die Aufbereitung von Fällungskieselsäure, deren Verwendung zur Wärmedämmung sowie Formkörper für die Verwendung als Wärmedämmung.

Das Dokument US-A 4,681,788 beschreibt Wärmedämmpanels, die gefällte Kieselsäure und Flugasche enthalten. Über die Methode zur Trocknung dieses Pulvers wird nichts angegeben.

Das Dokument EP-A 0 160 232 beschreibt ein hochtemperaturbeständiges Siliciumdioxid-Fasermaterial, das nach einer thermischen Behandlung bei ca. 1000 °C zur Herstellung von Hochtemperaturisolierungen eingesetzt werden kann. Die Trocknung der Fasern kann durch Mikrowellenbestrahlung erfolgen.

Es ist bekannt, Fällungskieselsäure sprühzutrocknen, zu vermahlen, zu trocknen und als Wärmedämmaterial in evakuierten Wärmedämmplatten einzusetzen (vgl. EP-PS 190 582).

Diese Fällungskieselsäuren haben hervorragende Eigenschaften als Wärmedämmaterial. Es bestand jedoch ein Interesse, eine Fällungskieselsäure herzustellen, die dem Ideal des totalen Isolators noch näher kommt. Bevorzugt werden diese Wärmedämmaterialien vorzugsweise im Tieftemperaturbereich, wie z. B. in Kühlschränken und Gefrierschränken, eingesetzt.

Gegenstand der Erfindung ist ein Verfahren zur Aufbereitung von Fällungskieselsäure, welches dadurch gekennzeichnet ist, daß man die Fällungskieselsäure mittels Mikrowellen trocknet.

Als Fällungskieselsäure kann man bekannte Fällungskieselsäuren einsetzen. Derartige Fällungskieselsäuren werden beispielsweise in der EP-OS 190 582 beschrieben.

Zur Erzeugung der Mikrowellen kann eine handelsübliche Vorrichtung eingesetzt werden.

Die erfindungsgemäß aufbereitete Fällungskieselsäure kann als Wärmedämmaterial, z. B. in einem evakuierten Behälter, eingesetzt werden.

Das Wärmedämmaterial kann ein Formkörper, vorzugsweise plattenförmig, für die Verwendung als Wärmedämmung, bestehend aus
a) Fällungskieselsäure, die mittels Mikrowellen getrocknet wurde,
b) einer gas- und wasserdichten Umhüllung, die diese Fällungskieselsäure enthält, sein.

Die Fällungskieselsäure kann in einer mikroporösen Umhüllung verpreßt werden.

Die Fällungskieselsäure kann in einer mikroporösen Umhüllung mittels Mikrowellen getrocknet werden.

Dabei kann die mikroporöse Umhüllung, die Fällungskieselsäure in gepreßtem und getrocknetem Zustand enthält, in die gas- und wasserdichte Umhüllung eingebracht werden.

Ein weiterer Gegenstand der Erfindung in ein Verfahren zur Herstellung eines Formkörpers für die Verwendung als Wärmedämmung welches dadurch gekennzeichnet in, daß man
a) die Fällungskieselsäure bei einer Temperatur, die ausreicht, um das physikalisch, das heißt oberflächlich, der Kieselsäure anhaftende Wasser auszutreiben, mittels Mikrowellen trocknet,
b) die Fällungskieselsäure verpreßt,
c) die getrocknete und verpreßte Fällungskieselsäure in eine gas- und wasserdichte Umhüllung, die eine Öffnung zum Evakuieren aufweist, einbringt,
d) die gas- und wasserdichte Umhüllung gegebenenfalls evakuiert und
e) die Evakuierungsöffnung der gas- und wasserdichten Umhüllung verschließt.

In einer bevorzugten Ausführungsform des erfindungsgemäßen Verfahrens kann man die Fällungskieselsäure in einer mikroporösen Umhüllung mittels Mikrowellen trocknen.

In einer besonders bevorzugten Ausführungsform des erfindungsgemäßen Verfahrens kann man die Fällungskieselsäure in einer mikroporösen Umhüllung verpressen und danach mittels Mikrowellen trocknen.

Als mikroporöse Umhüllung, die im Prinzip dazu dient, den feinteiligen, pulverförmigen Stoff während des Trocknens und Verpressens zusammenzuhalten, kann eine Folie oder ein Vliesstoff aus z. B. Polypropylen oder Filterpapier verwendet werden.

Im allgemeinen kann zu diesem Zweck eine Folie oder ein Material verwendet werden, das Luft und Feuchtigkeit durchläßt und den feinteiligen, pulverförmigen Stoff zurückhält.

In einer weiteren Ausführungsform der Erfindung kann man die Fällungskieselsäure verpressen, das heißt, ohne mikroporöse Umhüllung und danach mittels Mikrowellen trocknen.

Das erfindungsgemäße Verfahren weist den Vorteil auf, daß das der Fällungskieselsäure anhaftende Wasser selektiv verdampft wird. Es ist also nicht notwendig, die gesamte Fällungskieselsäure einschließlich Wasser aufzuheizen, um über Konvektion/Wärmeleitung das Wasser zu verdampfen. Erfindungsgemäß wird durch die hohe Eindringtiefe lediglich das Wasser durch die Mikrowellenstrahlung erhitzt und verdampft. Hierdurch ist es möglich, den Trocknungsvorgang in sehr kurzer Zeit (innerhalb von 0,5 bis 15 Minuten) durchzuführen.

Nach bekannten Trocknungsverfahren sind Zeiten von mehreren Stunden zum Trocknen notwendig.

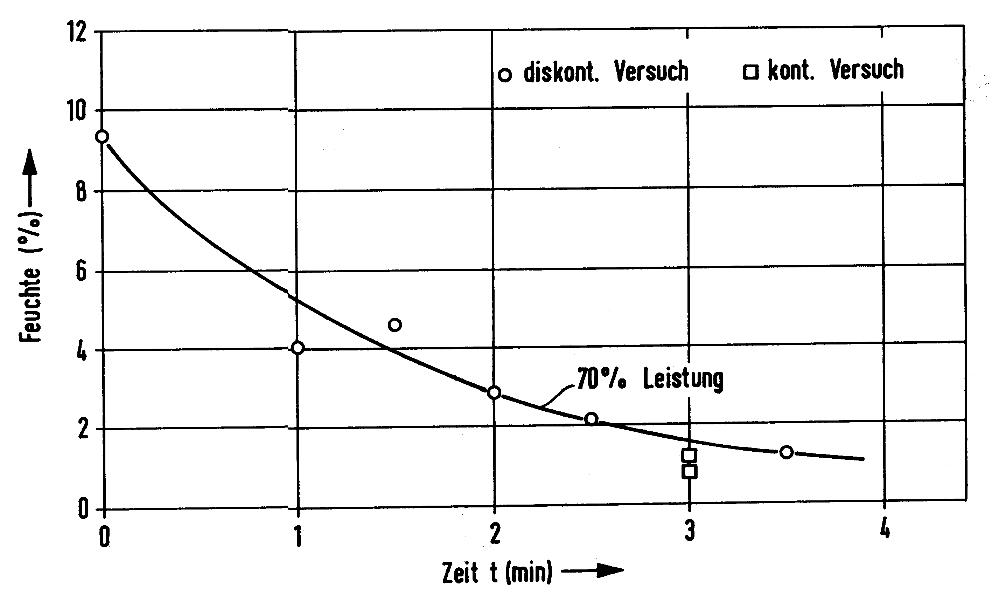

Der Trocknungsverlauf einer Fällungskieselsäure bei der Verwendung einer Mikrowellenvorrichtung kann der Figur 1 entnommen werden.

## Patentansprüche

1. Verfahren zur Aufbereitung von Fällungskieselsäure, dadurch gekennzeichnet, daß man die Fällungskieselsäure mittels Mikrowellen trocknet.

2. Verfahren zur Herstellung eines Formkörpers für die Verwendung als Wärmedämmung, dadurch gekennzeichet, daß man
a) Fällungskieselsäure bei einer Temperatur, die ausreicht, um das Oberflächenwasser auszutreiben, mittels Mikrowellen trocknet,
b) die Fällungskieselsäure verpreßt,
c) die getrocknete und verpreßte Fällungskieselsäure in eine gas- und wasserdichte Umhüllung, die eine Öffnung zum Evakuieren aufweist, einbringt,
d) die gas- und wasserdichte Umhüllung evakuiert und
e) die Evakuierungsöffnung der gas- und wasserdichten Umhüllung verschließt.

3. Abwandlung des Verfahrens nach Anspruch 2, dadurch gekennzeichnet, daß man die Fällungskieselsäure in einer mikroporösen Umhüllung mittels Mikrowellen trocknet.

4. Abwandlung des Verfahrens nach Anspruch 2, dadurch gekennzeichnet, daß man die Fällungskieselsäure in einer mikroporösen Umhüllung verpreßt und danach mittels Mikrowellen trocknet.

5. Abwandlung des Verfahrens nach Anspruch 2, dadurch gekennzeichnet, daß man die Fällungskieselsäure verpreßt und danach mittels Mikrowellen trocknet.

## Claims

1. Process for preparing precipitated silicic acid, characterised in that the precipitated silicic acid is dried by means of microwaves.

2. Process for producing a moulded body for use as thermal insulation, characterised in that
a) precipitated silicic acid is dried by means of microwaves at a temperature sufficient to drive out the surface water,
b) the precipitated silicic acid is compressed,
c) the dried and compressed precipitated silicic acid is placed in a gas-tight and water-tight envelope which has an aperture for the purpose of evacuation,
d) the gas-tight and water-tight envelope is evacuated, and
e) the evacuation aperture of the gas-tight and water-tight envelope is closed.

3. Modification of the process according to Claim 2, characterised in that the precipitated silicic acid is dried in a microporous envelope by means of microwaves.

4. Modification of the process according to Claim 2, characterised in that the precipitated silicic acid is compressed in a microporous envelope and is then dried by means of microwaves.

5. Modification of the process according to Claim 2, characterised in that the precipitated silicic acid is compressed and is then dried by means of microwaves.

## Revendications

1. Procédé pour le traitement de silice précipitée, caractérisé en ce que l'on sèche la silice au moyen de micro-ondes.

2. Procédé pour la fabrication d'un corps moulé pour l'utilisation en tant qu'isolation thermique, caractérisé en ce que :
a) on sèche au moyen de micro-ondes la silice précipitée, à une température qui est suffisante pour chasser l'eau superficielle,
b) on comprime la silice précipitée,
c) on introduit la silice précipitée, une fois séchée et comprimée, dans une enveloppe étanche aux gaz et à l'eau, qui présente un orifice pour la mise sous vide,
d) on met sous vide l'enveloppe étanche aux gaz et à l'eau, et
e) on obture l'orifice de mise sous vide de l'enveloppe étanche aux gaz et à l'eau.

3. Modification du procédé selon la revendication 2, caractérisée en ce que l'on sèche la silice précipitée, au moyen de micro-ondes, dans une enveloppe microporeuse.

4. Modification du procédé selon la revendication 2, caractérisée en ce que l'on comprime la silice précipitée, dans une enveloppe microporeuse, et ensuite on la sèche au moyen de micro-ondes.

5. Modification du procédé selon la revendication 2, caractérisée en ce que l'on comprime la silice précipitée et ensuite on la sèche au moyen de micro-ondes.
